# EUROPÄISCHE PATENTSCHRIFT

(11) **EP 1 907 242 B1**
(45) Veröffentlichungstag und Bekanntmachung des Hinweises auf die Patenterteilung: **19.05.2010**
(21) Anmeldenummer: 06761784.5
(22) Anmeldetag: 04.07.2006
(51) Int. Cl.: B60R 21/239

(54) **GASSACK FÜR EIN FAHRZEUGINSASSEN-RÜCKHALTESYSTEM**
AIRBAG FOR A VEHICLE PASSENGER RESTRAINT SYSTEM
SAC GONFLABLE POUR SYSTEME DE RETENUE DE PASSAGERS DE VEHICULE

(30) Priorität: 18.07.2005 DE 102005034250
(43) Veröffentlichungstag der Anmeldung: 09.04.2008
(73) Patentinhaber: Takata-Petri AG, 63743 Aschaffenburg (DE)
(72) Erfinder: RIEDEL, Andreas, 89257 Illertissen (DE); SCHAUPP, Jochen, 73431 Aalen (DE); GUTMANN, Ralf, 89075 Ulm (DE); GLÖCKLER, Oliver, 89278 Nersingen (DE)
(74) Vertreter: Müller, Wolfram Hubertus
(86) Internationale Anmeldenummer: PCT/DE2006/001182
(87) Internationale Veröffentlichungsnummer: WO 2007/009427

(56) Entgegenhaltungen:
- EP-A- 1 391 355
- EP-A- 1 514 743
- EP-A2- 1 361 120
- JP-A- 10 076 908
- US-A- 5 603 526
- US-A- 5 803 121

## Beschreibung

Die Erfindung betrifft einen Gassack für ein Fahrzeuginsassen-Rückhaltesystem, der mindestens eine mit Gas befüllbare Gassackkammer aufweist, die mit mindestens einer Ausströmvorrichtung versehen ist, über die Gas aus der Gassackkammer austreten kann.

Ein derartiger Gassack ist beispielsweise aus der US-A-5 603 526 bekannt, die einen Gassack beschreibt, bei dem eine mit einer Ausströmöffnung versehene Haupt-Gewebelage eines Gassacks im Bereich der Ausströmöffnung durch eine mit der Haupt-Gewebelage vernähte Zusatz-Gewebelage abgedeckt ist. Bei Erreichen eines vorbestimmten Drucks reißt die Zusatz-Gewebelage entlang einer Reißnaht auf, sodass Gas aus dem Inneren des Gassacks austreten kann.

Aus der US-A1-2003/0209895 ist ein Airbagsystem mit einem Gassack bekannt, bei dem eine Ausströmöffnung über einem zylinderförmigen Gewebestutzen bereitgestellt wird, der sich bei Erreichen eines vorbestimmten Innendruckes im Gassack nach außen entfaltet. Aus der US-A1-2004/0130135 ist ebenfalls ein Gassack bekannt, bei dem ein zylinderförmiger Gewebestutzen bei Vorliegen eines bestimmten Innendruckes nach außen gestülpt wird und dabei eine Ausströmöffnung des Gassackes bereitstellt.

Die US-B2-6 832 778 beschreibt ein Fahrzeuginsassen-Sicherheitssystem, bei dem in Abhängigkeit vom Entfaltungszustand eines Gassacks Ausströmöffnungen in die Umgebung abgedeckt oder freigegeben werden.

EP-A-1 391 355, die als nächstliegunder Stand der Technik betrachtet wird, offenbart einen Gassack für ein Fahrzeuginsassen-Rückhaltesystem gemäß dem Oberbegriff des unabhägigen Anspruchs 1.

Der vorliegenden Erfindung liegt die Aufgabe zugrunde, weitere Ausgestaltungen eines Gassacks für ein Fahrzeuginsassen-Rückhaltesystem zur Verfügung zu stellen, die ein Ausströmen von Gas von einer ersten Gassackkammer in eine zweite Gassackkammer ermöglichen.

Diese Aufgabe wird durch einen Gassack mit den Merkmalen des Anspruchs 1 gelöst. Bevorzugte und vorteilhafte Ausgestaltungen der Erfindung sind in den Unteransprüchen angegeben.

Die Erfindung sieht vor, dass die Ausströmvorrichtung der Gassackkammer einen rohrförmigen länglichen Fortsatz umfasst, der in der Wandung der Gassackkammer ausgebildet ist und eine Ausströmöffnung der Gassackkammer bereitstellt. Der Gassack weist eine erste Gassackkammer und eine zweite Gassackkammer auf, wobei der rohrförmige Fortsatz an der ersten Gassackkammer ausgebildet ist und in die zweite Gassackkammer ragt. Dabei ist der Gassack derart ausgebildet, dass die zweite Gassackkammer im Auslösefall ausschließlich mittels des in die zweite Gassackkammer ragenden rohrförmigen Fortsatzes durch die erste Gassackkammer mit Gas befüllt wird. Der rohrförmigen Fortsatz - im Folgenden auch als Schnorchel bezeichnen - ist dabei forminstabil in dem Sinne, dass er, sofern kein Gas durch ihn geleitet wird, umknickt und in sich zusammenfällt. Der rohrförmige Fortsatz stellt ein Ventil dar, dass ein Durchströmen mit Gas nur in einer Richtung, nämlich in Richtung der zweiten Gassackkammer, erlaubt.

Weiter sind in einer vorteilhaften Ausgestaltung die erste Gassackkammer und die zweite Gassackkammer übereinander angeordnet, wobei der rohrförmige Fortsatz bei Durchströmen mit Gas vertikal nach oben in die zweite Gassackkammer ragt und bei Fehlen eines durchströmendes Gases aufgrund der Schwerkraft in sich zusammenfällt.

Die Erfindung stellt eine Art Schnorchelventil bereit, wobei der Schnorchel nach Beendigung des Überströmens von Gas (d.h. nach einem Druckausgleich in den beiden Gassackkammern) umknickt und dabei verschlossen wird. Ebenso wird der Schnorchel verschlossen, wenn in der zweiten Gassackkammer ein Überdruck herrscht, etwa weil ein Fahrzeuginsasse in Kontakt mit der zweiten Gassackkammer getreten ist. Insofern stellt diese Erfindungsvariante auch sicher, dass nicht Gas in die erste Gassackkammer einströmen kann. Der Schnorchel ist bevorzugt aus dem Standardmaterial des Gassacks gebildet.

Die Erfindung wird nachfolgend unter Bezugnahme auf die Figuren näher erläutert. Es zeigen:
- Figur 1A: in Draufsicht schematisch ein Beispiel eines Gassacks mit einer Ausströmvorrichtung, die eine Zusatzlage umfasst, die über einer Ausströmöffnung des Gassacks angeordnet ist, wobei übereinanderliegende Lagen dargestellt sind;
- Figur 1 B: eine perspektivische Schnittansicht der Anordnung der Figur 1 A;
- Figur 2A: in Draufsicht schematisch ein weiteres Beispiel eines Gassacks mit einer Ausströmvorrichtung, die eine Zusatzlage umfasst, die über einer Ausströmöffnung des Gassacks angeordnet ist, wobei übereinanderliegende Lagen dargestellt sind;
- Figur 2B: eine perspektivische Schnittansicht der Anordnung der Figur 2A;
- Figur 3: in Draufsicht schematisch ein weiteres Beispiel eines Gassacks mit einer Ausströmvorrichtung, die eine Zusatzlage umfasst, die über einer Ausströmöffnung des Gassacks angeordnet ist, wobei übereinanderliegende Lagen dargestellt sind;
- Figur 4A: schematisch ein Ausführungsbeispiel eines erfindungsgemäßen Gassacks mit einer ersten Kammer und einer zweiten Kammer, wobei die zweite Kammer über einen Gassackschnorchel der ersten Kammer mit Gas befüllt wird;
- Figur 4B: den Gassack der Figur 4A, wobei der Gassackschnorchel nach Erreichen eines im Wesentlichen identischen Innendruckes in den beiden Gassackkammern umgeknickt ist;
- Figur 5A: ein weiteres Beispiel eines Gassacks mit einem zylinderförmigen, nach außen ragenden Strumpfschlauchventil;
- Figur 5B: den Gassack der Figur 5A, wobei in dem Strumpfschlauchventil eine teildurchlässige Hülse angeordnet ist, die durch den geschrumpften Strumpfschlauch luftdicht abgeschlossen ist;
- Figur 6A: ein weiteres Beispiel eines Gassacks mit einer Fangbandanordnung, die abhängig vom Entfaltungszustand des Gassacks eine Ausströmöffnung des Gassacks schließt oder freigibt, wobei der Gassack in einem ersten Faltungszustand dargestellt ist; und
- Figur 6B: die Anordnung der Figur 6A in einem zweiten Faltungszustand des Gassacks.

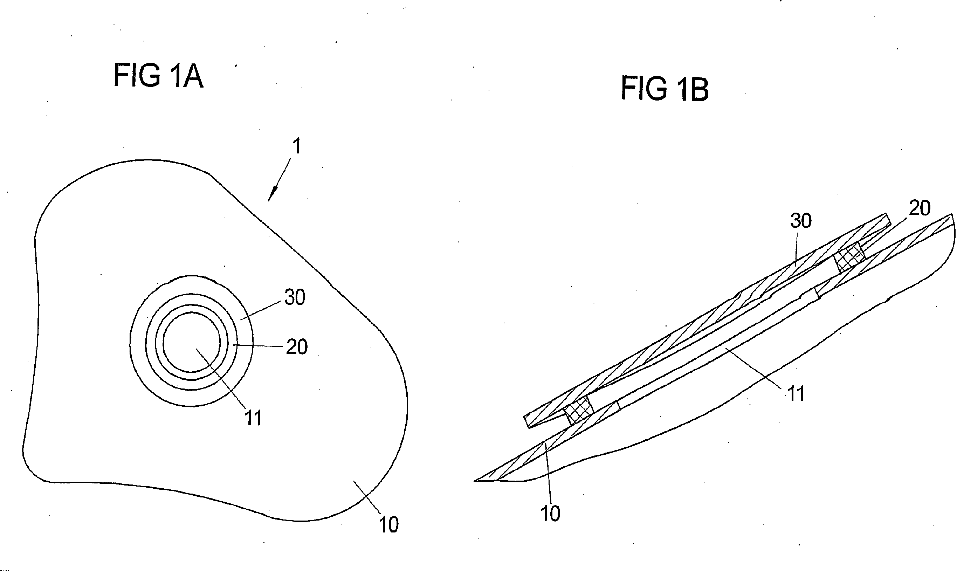

Die Figuren 1A, 1B, 2A, 2B, 3, 5A, 5B, 6A und 6B stellen keine Ausführungsbeispiele der Erfindung dar, dienen jedoch dem besseren Verständnis der Erfindung.

Die folgenden Figuren zeigen jeweils einen Gassack für ein Fahrzeuginsassen-Rückhaltesystem, der eine in den einzelnen Figuren unterschiedlich ausgebildete Ausströmvorrichtung aufweist, die ein Austreten von Gas aus einer Gassackkammer entweder in die freie Umgebung oder in eine weitere Gassackkammer eines Gassacks ermöglicht. Das Fahrzeuginsassen-Rückhaltesystem weist neben dem dargestellten Gassack weitere typische Elemente eines Fahrzeuginsassen-Rückhaltesystems auf, wie insbesondere einen Gasgenerator, Airbagsensoren und eine Steuervorrichtung. Des Weiteren kann das Rückhaltesystem in Abhängigkeit von der konkreten Implementierung Elemente wie einen Diffusor, eine Gaslanze oder ein Gehäuse aufweisen. Solche Elemente sind in den Figuren nicht gesondert dargestellt, da sie dem Fachmann wohlbekannt sind.

Es wird weiter darauf hingewiesen, dass die im Folgenden beschriebenen Gassäcke in beliebiger Weise, insbesondere als Frontalairbag für den Fahrer, als Frontalairbag für den Beifahrer, als Seitenairbag, als Knieairbag oder als Kopfairbag ausgebildet sein können. Die beschriebenen Ausströmvorrichtungen sind bei grundsätzlich sämtlichen Airbagsystemen eines Kraftfahrzeuges einsetzbar.

Die nachfolgende Beschreibung der Figuren unterscheidet, sofern nicht direkt angesprochen, nicht zwischen Situationen, bei denen das Gas mittels der jeweils beschriebenen Ausströmvorrichtung in das Freie (die umgebende Außenwelt) strömt und Situationen, bei denen das Gas mittels der jeweils beschriebenen Ausströmvorrichtung von einer ersten Gassackkammer in eine oder mehrere weitere Gassackkammern strömt. Grundsätzlich sind die beschriebenen Gassäcke und Ausströmvorrichtungen für beide Varianten einsetzbar.

Im Folgenden wird stets von einer Gassackkammer gesprochen. Sofern der Gassack nur eine Kammer aufweist, ist die Gassackkammer identisch mit dem Gassack.

Die Figuren 1A, 1B zeigen eine Gassackkammer 1 mit einer Gassackwandung. Die Gassackwandung weist eine Gewebe-Hauptlage 10 auf. In dieser befinden sich ein oder mehrere Ausströmöffnungen 11 (so genannte Ventholes), die beispielsweise kreisförmig ausgebildet sind. Die Hauptlage 10 besteht aus einem beliebigen Gassackmaterial.

Im Bereich der Öffnung 11 befindet sich über der Hauptlage 10 eine - nachfolgend auch als Membran bezeichnete - Zusatzlage 30. Bei der Zusatzlage 30 handelt es sich bevorzugt um eine Gewebelage. Als Material der Zusatzlage kommt neben einem Gewebe jedoch auch ein anderes flächiges Material wie beispielsweise eine Kunststofffolie oder eine Metallfolie in Frage.

Die Membran 30 ist nicht durch Vernähen mit der Hauptlage 10 verbunden, sondern über eine Zwischenschicht 20. Die Zwischenschicht 20 stellt eine Komponente dar, die der Verbindung von Hauptlage 10 und Membran 30 dient. Die Zwischenschicht 20 ist beispielsweise aus Silikon oder einer Kleberschicht gebildet.

Gemäß den Figuren 1A, 1Bist die Membran 30 ebenfalls kreisförmig ausgebildet, wobei ihr Rand über die Ausströmöffnung 11 der Hauptlage 10 übersteht. Dabei kommt es jedoch nicht auf die kreisförmige Ausgestaltung der Ausströmöffnung 11 und der Membran 30 an; diese müssen nur im Wesentlichen korrespondierende Formen besitzen, damit die Membran 30 die Ausströmöffnung 11 sicher abdecken kann.

Die Membran 30 ist über die Zwischenschicht 20 entlang ihres kompletten Umfangs mit der Hauptlage 10 verbunden und verschließt auf diese Weise die Ausströmöffnung 11 vollständig. Bei Erreichen eines Mindestdrucks in der Gassackkammer 1 wird die Membran 30 abgesprengt. Die Membran 30 ist reißfest ausgebildet, d.h. bei Erreichen des Mindestdruckes wird sie insgesamt von der Hauptlage 10 abgetrennt, ohne dass sie in sich reißt.

Der Mindestdruck, der zum Absprengen der Membran 30 vorliegen muss, ist abhängig insbesondere von der Dicke und Breite der Zwischenschicht 20 und der diesbezüglichen Klebe- bzw. Verbindungsflächen von Membran 30 und Hauptlage 10, sowie der Stärke der Verbindung bzw. Klebung. Ein gewünschter Mindestdruck kann bei Kenntnis der genannten Parameter definiert eingestellt werden.

Die beschriebene Anordnung realisiert ein druckabhängiges Öffnen einer Ausströmvorrichtung bestehend aus einer Ausströmöffnung 11, einer Zwischenschicht 20 und einer Zusatzlage 30.

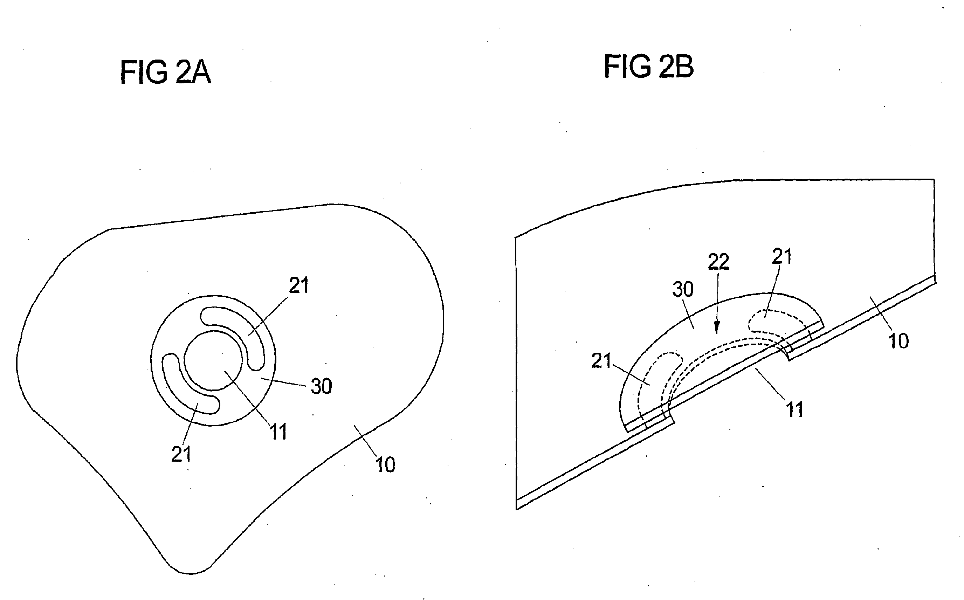

Die Figuren 2A, 2B zeigen eine alternative Ausgestaltung, die sich gegenüber der Ausgestaltung der Figuren 1A, 1B in der Realisierung der Zwischenlage unterscheidet.

Anders als bei der Ausführung der Figuren 1A, 1B ist die Zwischenschicht bei der Ausführung der Figuren 2A, 2B nicht durchgehend ausgeführt, sondern bildet räumlich begrenzte Verbindungsflächen 21, die von Leerbereichen 22 unterbrochen sind. Im dargestellten Beispiel sind zwei teilkreisförmige Bereiche, 21 der Zwischenschicht vorgesehen.

Die nur teilweise Verbindung der Membran 30 entlang ihres Umfangs an der Hauptlage 10 führt dazu, dass durch die Ausströmöffnung 11 und die Leerbereiche 22 in jedem Entfaltungszustand der Gassackkammer 1 Luft aus der Ausströmöffnung 11 ausströmen kann, beispielsweise in die Umgebung oder in eine weitere Gassackkammer. Die die Ausströmöffnung 11 seitlich überlappende Membran 30 bewirkt jedoch, dass bei einer Umkehr der Strömungsrichtung die Membran die Funktion eines Dichtelements übernimmt. Es wird ein Rückschlagventil bereit gestellt, das lediglich erlaubt, dass das strömende Gas in einer Strömungsrichtung die Ausströmvorrichtung bzw. das durch diese gebildete Ventil passiert, während das Gas in der anderen Strömungsrichtung zu einem Verschließen des Ventils führt. Diese Ausgestaltung der Erfindung ermöglicht es insbesondere, ausgehend von einer ersten Gassackkammer eine oder mehrere weitere Gassackkammern mit Gas zu befüllen, ohne dass von diesen weiteren Kammern Gas in die erste Kammer rückströmen kann.

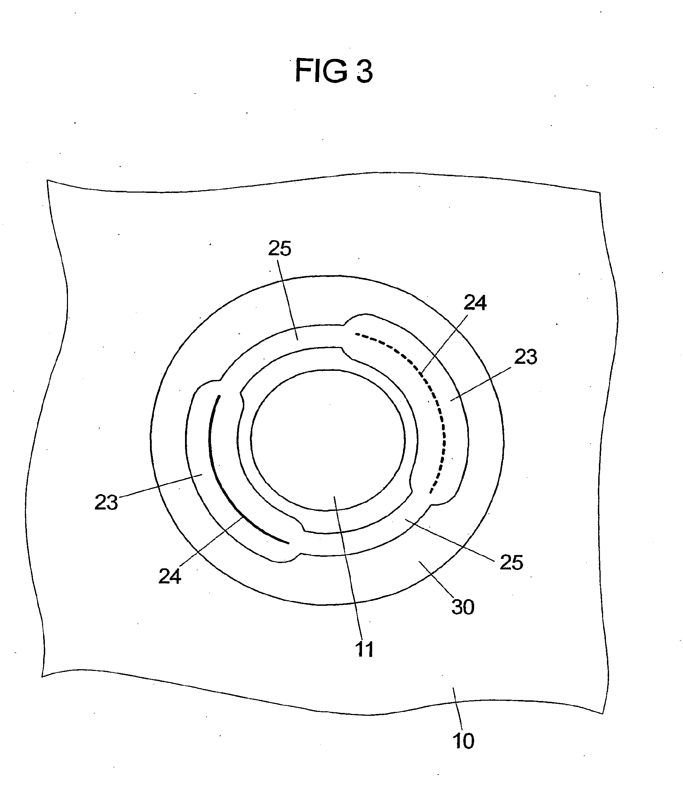

Die Figur 3 zeigt eine Kombination der Ausgestaltungen der Figuren 1A, 1B und 2A, 2B. Wie bei der Figur 1A, 1B ist die Zwischenlage 20 durchgehend ausgeführt, d.h. sie erstreckt sich entlang des gesamten Umfanges der Membran 30 zwischen dieser und der Hauptlage 11. Es ist jedoch mindestens ein Bereich 23 vorgesehen, der Mittel 24 aufweist, die bewirken, dass sich die Membran 30 in dem betrachteten Bereich 23 nicht von der Hauptlage 10 trennen kann. Im dargestellten Beispiel sind diese zusätzlichen Mittel eine Naht 24, die die Membran 30 und die Hauptlage 10 in dem betrachteten Bereich 23 fest miteinander verbinden. Im dargestellten Beispiel sind zwei solcher haltender Bereiche 23 vorgesehen, wobei jedoch auch eine andere Anzahl solcher Bereiche 23 möglich ist. Die Zwischenlage bildet des Weiteren sich öffnende Bereiche 25 aus, die sich zwischen den haltenden Bereichen 23 befinden.

Die Funktion dieses Beispiels ist wie folgt. Bei Erreichen eines Mindestdruckes in der Gassackkammer 1 öffnen sich die öffnenden Bereiche 25, während die Membran 30 entlang der haltenden Bereiche 23 weiterhin mit der Hauptlage 10 verbunden ist. Ab einem bestimmten Druck erfolgt somit ein Überströmen von Gas in die Umgebung oder in eine weitere Gassackkammer, wobei in Ergänzung zu der Funktionalität der Ausgestaltung der Figur 1 die Funktionalität eines Rückschlagventils bereitgestellt wird, d.h. bei einer Umkehrung der Strömungsrichtung wird die Ausströmöffnung 11 durch die Membran 30 verschlossen. Es wird somit ein Rückschlagventil realisiert, das erst ab einem vorgegebenen Druck öffnet.

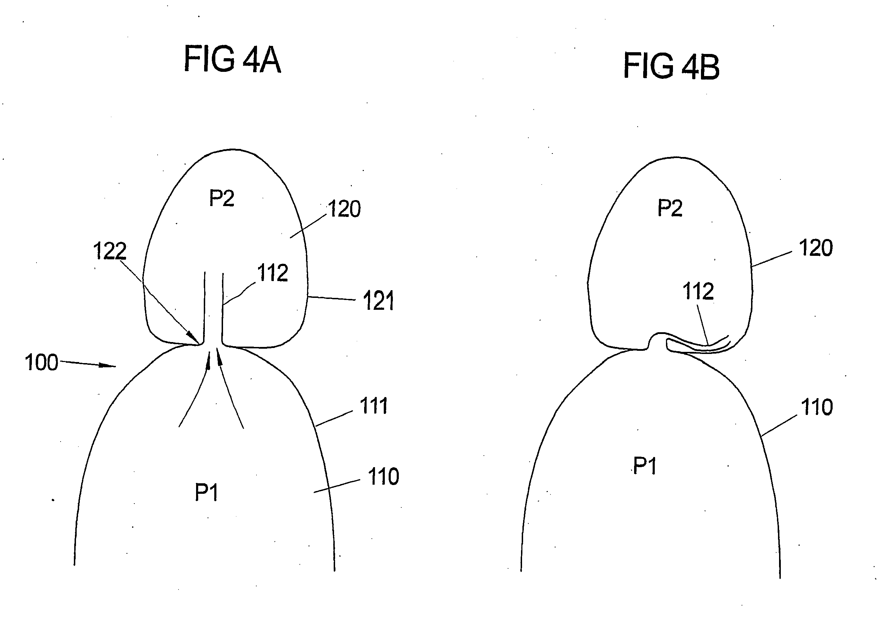

Die Figuren 4A, 4B zeigen ein Ausführungsbeispiel eines Gassacks 100, der mindestens zwei schematisch dargestellte Gassackkammern 110, 120 aufweist. Beispielsweise handelt es sich um zwei Gassackkammern eines Seiten-Airbags, nämlich eine Thorax- Kammer 110 und eine Kopf-Kammer 120.

Es ist vorgesehen, dass die zweite Kammer 120 durch die erste Kammer 110 mit Gas befüllt wird. Hierzu bildet die Gassackwandung 111 der ersten Kammer 110 einen zylinderförmigen, nachfolgend auch als Schnorchel bezeichneten Fortsatz 112 aus, der in eine entsprechende Öffnung 122 der Wandung 121 der zweiten Gassackkammer 120 ragt. Der Schnorchel 112 besteht aus einem forminstabilen Material, d.h. bei Fehlen eines Innendruckes fällt der Schorchel 122 zusammen. Bevorzugt besteht der Schnorchel 112 aus dem Material der Gassackwandung 111.

Die Figur 4A zeigt die Situation, dass in der ersten Gassackkammer ein Druck P1 herrscht, der größer ist als der Druck P2 in der zweiten Gassackkammer 120. Dementsprechend strömt Gas durch den Schnorchel 112 in die zweite Gassackkammer 120. Aufgrund der Durchströmung mit Gas und des damit verbundenen Innendrucks wird der Schnorchel 112 gerade ausgerichtet und ragt vertikal nach oben in die zweite Gassackkammer 120.

Die Figur 4B zeigt die Situation, dass die Drücke P1, P2 in den beiden Gassackkammern 110, 120 im Wesentlichen identisch sind, der Füllvorgang der zweiten Gassackkammer 120 also abgeschlossen ist. Für diesen Fall strömt kein Gas mehr durch den Schnorchel 112 und dieser fällt aufgrund der fehlenden Formstabilität und der Schwerkraft zusammen und knickt um. Hierdurch wird der Schnorchel 112 verschlossen. Es wird dementsprechend ein Schnorchelventil bereitgestellt, dass ein Durchströmen mit Gas nur in einer Richtung erlaubt.

Es wird darauf hingewiesen, dass der Schnorchel 112 in gleicher Weise umknickt, wenn der Druck P2 in der zweiten Gassackkammer 120 - etwa aufgrund eines Aufpralls des Insassen - höher ist als der Druck P1 in der ersten Gassackkammer 110.

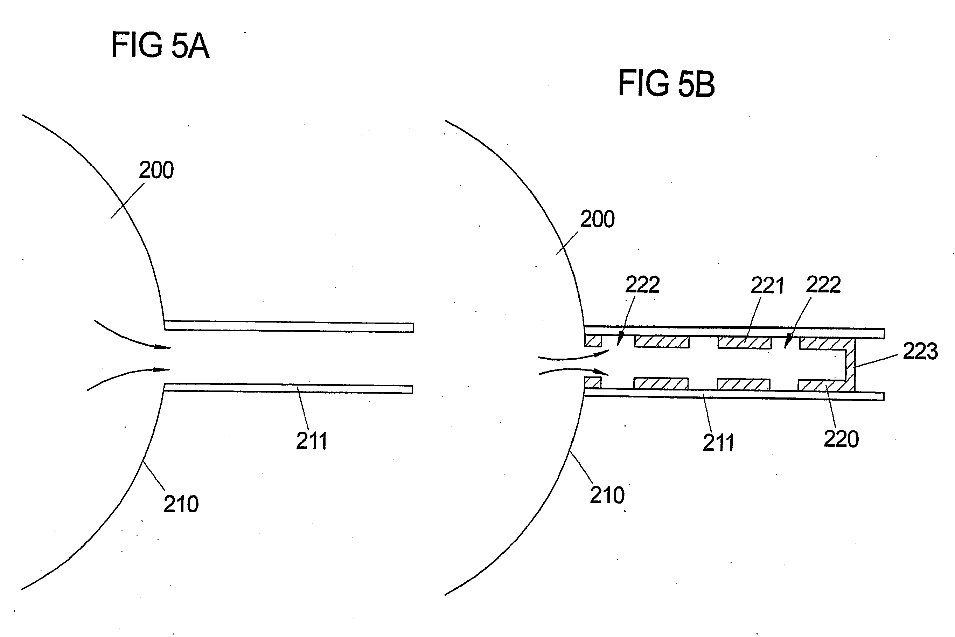

Die Figuren 5A, 5B zeigen ein Beispiel, bei dem gemäß Figur 5A eine Gassackkammer 200 in ihrer Wandung 210 eine Ausgangsöffnung in Form eines Schlauches 211 bildet, der zylinderförmig ausgebildet und bevorzugt formstabil ist. Der Schlauch 211 besteht dabei aus einem Material, dass bei Erwärmung schrumpft, sodass der Querschnitt des Schlauches 211 und damit die ausströmende Gasmenge bei Erwärmung reduziert werden. Der Schlauch 211 wird dementsprechend im Folgenden als Strumpfschlauch 211 bezeichnet.

Eine mögliche Anwendung eines Strumpfschlauchs 211 zur Steuerung des Stroms einer Gasmenge zeigt die Figur 5B. Bei der Ausgestaltung der Figur 5B befindet sich innerhalb des Strumpfschlauches 211 eine Hülse 220, die seitliche Wandbereiche 221 aufweist, die von Öffnungen 222 unterbrochen sind. Die der Gassackkammer 200 abgewandte Stirnseite 223 der Hülse 220 ist verschlossen. Solange der Strumpfschlauch 211 noch nicht am Umfang der Hülse 220 anliegt, kann ausströmendes Gas durch die seitlichen Öffnungen 222 nach außen strömen. Da das ausströmende Gas eines Fahrzeuginsassen-Rückhaltesystems in der Regel eine hohe Temperatur aufweist, schrumpft der Strumpfschlauch 211 zunehmend bei Durchströmen mit dem heißen Gas. Dies führt dazu, dass der Strumpfschlauch 211 zur Anlage an die Außenseite der Hülse 220 gelangt. Wenn dies erfolgt, kann Gas nicht mehr durch die seitlichen Öffnungen 222 der Hülse 220 nach außen gelangen. Der Gasstrom nimmt somit zunehmend ab und kommt vollständig zum Erliegen, wenn der Strumpfschlauch 211 aufgrund des Schrumpfungsvorgangs an die Wandung der Hülse 220 stößt.

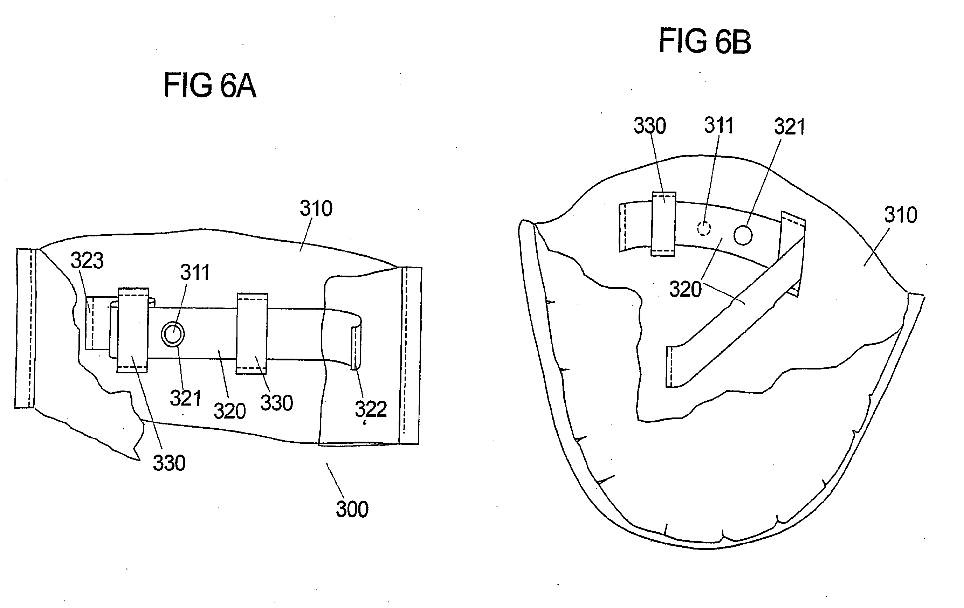

Die Figuren 6A, 6B zeigen ein Beispiel, bei dem eine Ausströmvorrichtung einer Gassackkammer mit Hilfe eines Fangbands gesteuert wird. Eine Gassackkammer 300 weist in seiner Gassackwandung 310 eine Ausströmöffnung 311 auf. Die Ausströmöffnung 311 erlaubt ein Ausströmen von Gas in die Umgebung des Gassackes oder eine weitere Gassackkammer. Über der Ausströmöffnung 311 befindet sich ein flächiges Fangband 320, dessen zwei Enden 322, 323 fest an der Gassackwandung 310 befestigt sind. Des Weiteren sind an der Gassackwandung Schlaufen 330 vorgesehen, durch die das Fangband 320 benachbart der Ausströmöffnung 320 gefädelt ist. In einer der Schlaufen 330 oder an anderer Stelle ist das Fangband 320 dabei mehrfach gefaltet, so dass ein Reservoir an Fangbandmaterial vorliegt.

Im dargestellten Beispiel ist vorgesehen, das im nicht entfalteten Zustand die Öffnung z321 des Fangbandes 320 über der Ausströmöffnung 311 der Gassackwandung 310 angeordnet ist, sodass zu Beginn einer Entfaltung Gas durch die Öffnungen 321, 311 aus ,der Gassackkammer 300 herausströmen kann. Mit dem Entfaltungsvorgang und dem damit zusammenhängenden Straffen des Fangbandes 320 verschiebt sich die Öffnung 321 des Fangbandes 320 relativ zur Ausströmöffnung 311 der Gassackwandung 310, sodass die anfangs bestehende Übereinstimmung entfällt. Sobald die Öffnung 321 des Fangbandes 320 nicht mehr über der Ausströmöffnung 311 liegt, deckt das Fangband 320 die Ausströmöffnung 311 ab und verhindert ein weiteres Ausströmen von Gas.

Das beschriebene Beispiel gemäß den Figuren 6A und 6B ist dabei nur beispielhaft zu verstehen. Insbesondere ist es ebenso möglich, dass im nicht entfalteten Zustand des Gassackes oder der Gassackkammer die Öffnung 321 des Fangbandes 320 nicht über der Ausströmöffnung 311 liegt und dies erst in einem späteren Entfaltungszustand oder in dem finalen Entfaltungszustand des Gassackes erreicht wird, sodass dementsprechend erst zu einem späteren Zeitpunkt ein Auslassen von Gas über die Ausströmöffnung 311 möglich ist. Die genaue Ausgestaltung hängt von der gewünschten Steuerung des Gassackinnendruckes bei der Entfaltung ab.

Die beschriebenen Ausgestaltungen eines Gassacks für ein Fahrzeuginsassen-Schutzsystem ermöglichen eine Reduzierung der Insassenbelastung im Auslösefall durch Ausströmvorrichtungen, über die die Menge des ausströmenden Gases steuerbar ist.

## Patentansprüche

1. Gassack für ein Fahrzeuginsassen-Rückhaltesystem mit mindestens einer mit Gas befüllbaren Gassackkammer, die mindestens eine Ausströmvorrichtung aufweist, über die Gas aus der Gassackkammer austreten kann, wobei
- die Ausströmvorrichtung einen rohrförmigen Fortsatz (112) umfasst, der in der Wandung (111) der Gassackkammer (110) ausgebildet ist und eine Ausströmöffnung der Gassackkammer (110) bereitstellt,
- der Gassack (100) mindestens eine erste Gassackkammer (1,10) und eine zweite Gassackkammer (120) aufweist, wobei der rohrförmige Fortsatz (112) an der ersten Gassackkammer (110) ausgebildet ist und in die zweite Gassackkammer (120) ragt,
**dadurch gekennzeichnet, dass**
- dass der Gassack derart ausgebildet ist, dass die zweite Gassackkammer (120) im Auslösefall ausschließlich mittels des in die zweite Gassackkammer (120) ragendem rohrförmigen Fortsatzes (112) durch die erste Gassackkammer (110) mit Gas befüllt wird, und
- der rohrförmige Fortsatz (112) forminstabil in dem Sinne ist, dass er, sofern kein Gas durch ihn strömt, in der zweiten Gassackkammer umknickt, derart dass
- der rohrförmige Fortsatz (112) ein Ventil darstellt, dass ein Durchströmen mit Gas nur in einer Richtung, nämlich in Richtung der zweiten Gassackkammer (120), erlaubt:

2. Gassack nach Anspruch 1, **dadurch gekennzeichnet, dass** die erste Gassackkammer (110) und die zweite Gassackkammer (120) übereinander angeordnet sind, wobei der rohrförmige Fortsatz (112) bei Durchströmen mit Gas vertikal nach oben in die zweite Gassackkammer (120) ragt.

3. Gassack nach Anspruch 1 oder 2, **dadurch gekennzeichnet, dass** die beiden Gassackkammern (110, 120) zwei Gassackkammern eines Seiten-Airbags sind.

4. Gassack nach Anspruch 3, **dadurch gekennzeichnet, dass** die beiden Gassackkammern (100, 110) eine Thorax-Kammer (110) und eine Kopf-Kammer (120) eines Seiten-Airbags ausbilden.

5. Gassack nach einem der Ansprüche 1 bis 4, **dadurch gekennzeichnet, dass** der rohrförmige Fortsatz (112) zylinderförmig ist.

6. Gassack nach einem der Ansprüche 1 bis 5, **dadurch gekennzeichnet, dass** der rohrförmige Fortsatz (112) aus dem Material der Gassackwandung (111) besteht.

7. Gassack nach einem der Ansprüche 1 bis 6, **dadurch gekennzeichnet, dass** der Gassack derart ausgebildet ist, dass die zweite Gassackkammer (120) im Auslösefall ausschließlich mittels des in die zweite Gassackkammer (120) ragenden rohrförmigen Fortsatzes (112) so lange über die erste Gassackkammer (110) mit Gas befüllt wird, bis die Drücke in den beiden Gassackkammern (110, 120) im wesentlichen identisch sind oder der Druck in der zweiten Gassackkammer (120) höher ist als der Druck in der ersten Gassackkammer (110), worauf der rohrförmige Fortsatz (112) in der zweiten Gassackkammer (120) umknickt.

## Claims

1. An airbag for a vehicle passenger restraint system, said airbag having at least one airbag chamber, which can be filled with gas and which has at least one outflow device, via which gas can escape from the airbag chamber, wherein
- the outflow device comprises a tubular extension (112), which is formed in the wall (111) of the airbag chamber (110) and provides an outflow opening of the airbag chamber (110),
- the airbag (100) has at least a first airbag chamber (110) and a second airbag chamber (120), the tubular extension (112) being formed on the first airbag chamber (110) and extending into the second airbag chamber (120),
**characterized in that**
- the airbag is designed in such a way that, when triggered, the second airbag chamber (120) is filled with gas by the first airbag chamber (110) solely by means of the tubular extension (112) projecting into the second airbag chamber (120), and
- the tubular extension (112) is dimensionally unstable **in that** it bends over in the second airbag chamber, when no gas flows through it, in such a way that
- the tubular extension (112) constitutes a valve, which allows gas to flow through it only in one direction, that is in the direction of the second airbag chamber (120).

2. The airbag as claimed in claim 1, **characterized in that** the first airbag chamber (110) and the second airbag chamber (120) are arranged one on top of the other, the tubular extension (112), when gas flows through it, extending vertically upwards into the second airbag chamber (120).

3. The airbag as claimed in claim 1 or 2, **characterized in that** the two airbag chambers (110, 120) are two airbag chambers of a side airbag.

4. The airbag as claimed in claim 3, **characterized in that** the two airbag chambers (110, 120) form a chest chamber (110) and a head chamber (120) of a side airbag.

5. The airbag as claimed in any one of claims 1 to 4, **characterized in that** the tubular extension (112) is cylindrical.

6. The airbag as claimed in any one of claims 1 to 5, **characterized in that** the tubular extension (112) is composed of the same material of the airbag wall (111).

7. The airbag as claimed in any one of claims 1 to 6, **characterized in that** the airbag is designed in such a way that, when triggered, the second airbag chamber (120) is filled with gas via the first airbag chamber (110) solely by means of the tubular extension (112) projecting into the second airbag chamber (120), until the pressures in the two airbag chambers (110, 120) are substantially equal or the pressure in the second airbag chamber (120) is greater than the pressure in the first airbag chamber (110), whereupon the tubular extension (112) in the second airbag chamber (120) bends over.

## Revendications

1. Coussin à gaz pour un système de retenue de passagers dans un véhicule, comprenant au moins une chambre de coussin susceptible d'être remplie avec du gaz, qui présente au moins un dispositif d'échappement via lequel le gaz peut s'échapper hors de la chambre de coussin, dans lequel
- le dispositif d'échappement comprend un prolongement de forme tubulaire (112) qui est réalisé dans la paroi (111) de la chambre de coussin (110) et constitue une ouverture d'échappement pour la chambre de coussin (110),
- le coussin à gaz (100) comprend au moins une première chambre de coussin (110) et une seconde chambre de coussin (120), le prolongement de forme tubulaire (112) étant réalisé sur la première chambre de coussin (110) et pénétrant dans la seconde chambre de coussin (120),
**caractérisé en ce que**
- le coussin à gaz est réalisé de telle façon que, dans le cas d'un déclenchement, la seconde chambre de coussin (120) est remplie avec du gaz exclusivement via la première chambre de coussin (110) au moyen du prolongement tubulaire (112) qui pénètre dans la seconde chambre de coussin (120), et
- le prolongement tubulaire (112) est de forme flexible en ce sens que, lorsqu'aucun gaz ne le traverse, il se replie dans la seconde chambre du coussin, de telle manière que
- le prolongement tubulaire (112) représente une valve qui ne permet un passage du gaz que dans une direction, à savoir en direction de la seconde chambre de coussin (120).

2. Coussin à gaz selon la revendication 1, **caractérisé en ce que** la première chambre de coussin (110) et la seconde chambre de coussin (120) sont agencées l'une au-dessus de l'autre, et le prolongement tubulaire (112) pénètre verticalement vers le haut dans la seconde chambre de coussin (120) lorsqu'il est traversé par le gaz.

3. Coussin à gaz selon la revendication 1 ou 2, **caractérisé en ce que** les deux chambres de coussin (110, 120) sont deux chambres de coussin d'un airbag latéral.

4. Coussin à gaz selon la revendication 3, **caractérisé en ce que** les deux chambres de coussin (110, 120) constituent une chambre de thorax (110) et une chambre de tête (120) d'un airbag latéral.

5. Coussin à gaz selon l'une des revendications 1 à 4, **caractérisé en ce que** le prolongement tubulaire (112) est de forme cylindrique.

6. Coussin à gaz selon l'une des revendications 1 à 5, **caractérisé en ce que** le prolongement tubulaire (112) est formé du matériau de la paroi (111) de coussin à gaz.

7. Coussin à gaz selon l'une des revendications 1 à 6, **caractérisé en ce que** le coussin à gaz est réalisé de telle façon que, en cas de déclenchement, la seconde chambre de coussin (120) est remplie avec du gaz via la première chambre de coussin (110) au moyen du prolongement tubulaire (112) qui pénètre dans la seconde chambre de coussin (120) aussi longtemps que les pressions dans les deux chambres de coussin (110, 120) soient sensiblement identiques ou bien que la pression dans la seconde chambre de coussin (120) soit supérieure à la pression dans la première chambre de coussin (110), suite à quoi le prolongement tubulaire (112) se replie dans la seconde chambre de coussin (120).
